(19) Europäisches Patentamt
European Patent Office
Office européen des brevets

(11) **EP 3 482 869 B1**

(12) **EUROPEAN PATENT SPECIFICATION**

(45) Date of publication and mention
of the grant of the patent:
**20.01.2021 Bulletin 2021/03**

(21) Application number: **18203583.2**

(22) Date of filing: **31.10.2018**

(51) Int Cl.:
**B23K 35/00** (2006.01)     **B21K 25/00** (2006.01)
**H05H 1/34** (2006.01)     **B23K 35/02** (2006.01)
**B21J 5/08** (2006.01)

(54) **PLASMA ARC TORCH ELECTRODE AND MANUFACTURING METHOD THEREOF**

PLASMALICHTBOGENBRENNERELEKTRODE UND HERSTELLUNGSVERFAHREN DAFÜR

ÉLECTRODE TORCHE À ARC AU PLASMA ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.11.2017 CZ 20170729**

(43) Date of publication of application:
**15.05.2019 Bulletin 2019/20**

(73) Proprietor: **B&Bartoni, spol. s r. o.
29430 Dolni Cetno, Doubravicka (CZ)**

(72) Inventors:
• **Adamec, Michal
29443 Vlkava (CZ)**
• **Chumchal, Roman
29430 Velké V elisy (CZ)**

(74) Representative: **Lachmannová, Eva
Sindelka & Lachmannová, advokati
Rimská 103/12
120 00 Praha 2 (CZ)**

(56) References cited:
**EP-A1- 1 099 360**     **EP-A2- 0 465 109**
**EP-A2- 1 233 660**     **JP-A- H05 185 288**
**US-A- 5 767 478**     **US-B1- 6 329 627**

## Description

Field of the Invention

This invention relates to a liquid- or air-cooled electrode for use in plasma arc torches and to the method of manufacturing such an electrode.

Background of the Invention

A device for material processing by means of plasma arc cutting is widely used for thermal parting of metallic materials, with a concentrated plasma flow used for the parting itself. This concentrated plasma flow consists of a high-temperature ionized gas. The gas is ionized in the plasma torch. The electric current and the compressed gas are brought into the plasma torch, where the gas is ionized and then forced out through a small orifice towards the material to be cut. In this way, a high-temperature, high-speed concentrated plasma flow is produced. Nitrogen, argon, air and oxygen are particularly used as the plasma gas. Both thermal and kinetic energy of the plasma arc are high, making it possible to cut metals, especially steel of great thickness, with high speed.

The heat radiating from the plasma arc is very high. The design of the plasma torch and its component parts reflects this fact. To reduce its temperature, the plasma torch is cooled. A liquid or a gas is used as a coolant, entering the torch body, where it cools heated components, and then leaves the torch body. In general, an arc plasma torch consists of the torch body, cooling pipe, electrode, swirl ring, nozzle, nozzle holder, guard, and nozzle shield cap. The torch body in particular provides the supply of electric current for the electrode and the supply of the plasma gas for the swirl ring, as well as the distribution of the coolant. The cooling pipe takes the coolant to the most heated part of the electrode. The electrode conducts the electric current, providing its output during the transition to the plasma flow. The swirl ring provides supply of the necessary volume of the plasma gas, directing it to the space between the electrode and the nozzle. The nozzle concentrates and directs the ionized gas into a condensed plasma flow. The nozzle holder holds the nozzle in the torch body and provides supply of the coolant for the nozzle. The guard shields the nozzle from any harm from the melted metal being cut. The nozzle shield cap attaches the nozzle shield cap to the torch body and provides a conduit for the gas or liquid coolant.

The plasma arc goes from the electrode to the material being cut. Both the passage of electric current nd the high temperature of the plasma arc cause intense thermal stress on the electrode. Therefore, the electrode body is made of copper, a copper alloy, silver, or a silver and copper alloy, or from copper and silver composites, because of the high heat and electric conductivity of such metals. Silver has the advantage of higher electric and heat conductivity, as well as resistance to oxidation and degradation at higher temperatures when exposed to oxygen and air, as the plasma gas. Copper has the advantage of a low price when compared to silver. Typically, plasma electrode bodies are made of copper.

The electrode is subject to the greatest thermal stress at the point of its contact with the plasma arc. At this point, a filling made of a material with high electric emissivity and high heat resistance is inserted into the electrode body; typically, this insert with high electric emissivity and high heat resistance is made of hafnium or tungsten, depending on the kind of gas used to generate the plasma arc. The employed gas might be either non-reactive, such as nitrogen or argon, or reactive, such as oxygen or air. Using air or oxygen as your plasma gas puts greater strain on the electrode which might oxidize when exposed to oxygen at high temperatures.

Operating expenses are an important factor when using the plasma cutting technology. The purchase cost of consumables is a major part of the operating expenses. The electrode is a wearing part.

A method of increasing the lifespan of the electrode, with the lowest possible manufacturing costs, is discussed e.g. by patent application JP 2011014295 (A), according to which the lifespan of the plasma electrode is increased when the copper electrode body is soldered to the hafnium emissive insert with silver solder. There is a drawback to this technology: the soldering process is exacting, while the lifespan of plasma electrodes is only slightly improved for low and medium loads.

Patent US-6,177,647 describes a solution where an emissive filling covered in a thin silver foil is pressed into the semi-finished copper electrode body. For electrodes manufactured in this way, however, the emissive filling might be sometimes misaligned from the electrode axis.

Patent document US-6,020,572 describes the design and manufacturing technology of a plasma electrode with a silver insert surrounding the hafnium insert. An insert made of a silver alloy containing 2-3 % of copper, with sidewall thickness exceeding 1 mm, in which there is a bore for the hafnium emissive filling, is put into an aperture in the semi-finished copper electrode. Then, the hafnium emissive filling is pressed into the assembly of the semi-finished copper product and the silver insert. This electrode has a long lifespan for all currents, but because the hafnium filling and the silver insert are secured in the copper body of the electrode by single-action pressing only, the coupling of the copper body and the silver insert is neither sufficient, nor stable.

This problem can be fixed using the solution described in EP 1 298 966, according to which the silver insert containing the hafnium filling is pressed into a pre-heated semi-finished copper electrode body made of a special copper alloy. After the semi-finished copper electrode body cools, the copper around the silver insert contracts because of its thermal expansion, and thus the silver insert is anchored in the semi-finished electrode. This solution ensures that the silver insert and the hafnium filling are firmly anchored within the copper body of the electrode. There is a drawback to this technology: a special copper alloy with 5 % nickel content must be used and the electrode must be assembled at a high temperature. For this type of electrode design, there is no direct cooling of the silver insert within the electrode.

Another possible technical solution is described in Patent US-6,841,754, according to which the semi-finished silver insert is attached to the semi-finished copper electrode body using friction welding, and then the semi-finished welded electrode is machine-tooled and the hafnium emissive filling is pressed into it. The lifespan of an electrode made using this technology is close to the lifespan of an electrode with a full silver body. A drawback of this technology is its high material demands.

Document US-5,767,478 describes an electrode comprising a metallic holder having a front end, and a cavity in said front end; and an emissive insert composed of hafnium, a sleeve composed of silver, said sleeve surrounds at least a portion of said emissive insert so as to separate said portion of said emissive insert from contact with said holder. There is no direct cooling of the silver insert within the electrode. N o any diameter enlarging of the silver insert on its side located at the front end of electrode body is mentioned.

A highly stable anchoring of both the silver insert and the hafnium filling in the copper body of the electrode is provided by a solution according to Patent US-6,114,650. Under this Patent, a silver alloy insert is put into the copper electrode body, then the emissive filling is put into a cavity in the silver insert. Then, axial force is applied to the emissive filling to cause a radial deformation, by means of which the emissive filling, along with the silver insert, is secured tight in the electrode body.

Patent US 6 329 627 B1 describes an electrode for a plasma arch torch and the making of it. The electrode comprises: a metallic holder having a front end, a cavity in said front end; an insert assembly mounted in said cavity and comprising: an emissive insert having an inner face, an outer face, and a bore formed therein, and a non-emissive core positioned within said bore, said non-emissive core having an end portion, wherein said non-emissive core acts to draw heat out of said emissive insert and transfer the heat to said metallic holder. It details that metallic the holder is made of copper and/or copper alloys, the sleeve composed of Ag and the emissive insert of hafnium, zirconium, tungsten, and alloys thereof. The production method discloses that the blank is swaged so that the insert assembly is bound to the cylindrical metallic body.

Summary of the Invention

The purpose of the invention is to provide a plasma arc cutting electrode with an improved lifespan which can be manufactured easily with low material demands.

The invention is based on the idea that in order to ensure efficient transmission of the electric current and heat through the solderless contact area between the copper electrode body and a highly thermally and electrically conductive insert, a positive engagement of the metals is created by pressing the silver insert into the copper body of the electrode, with no soldering or welding. According to this invention, the highly conductive insert, preferably made of silver, is pressed and caulked into the coaxial aperture, causing its plastic deformation, so that its diameter on its side situated at the front of the electrode body expands to exceed the diameter of the coaxial aperture.

On its side located inside the electrode body, the highly conductive insert is preferably fitted with a stop built as an annular expansion whose diameter is once again larger than the diameter of the coaxial aperture.

Because of the high concentration of the cutting flow at the output surface of the emissive filling (73 - 115 $A/mm^2$) and because of the intense heating of the emissive filling from the plasma arc, the emissive filling must be intensely cooled. Therefore, a material with the highest possible heat and electric conductivity must be used to surround the emissive filling. This requirement is best met using silver alloys containing no more than 20 % copper by mass, preferably no more than 10 % copper by mass.

The emissive filling, preferably made of hafnium, is of a cylindric shape and is inserted to the axial bore in the middle of the highly conductive insert. The thickness of the highly conductive insert surrounding the emissive filling ranges preferably from 0.5 mm at low current loads to 3 mm at high current loads. The diameter of the highly conductive insert ranges preferably from 1.6 mm at low current loads to 8.0 mm at high current loads. Length L of the coaxial aperture in the front end of the electrode body ranges preferably from 1.6 to 4.2 mm. The current conducted through the generated electric arc typically ranges from 50 to 500 A.

The required size of the contact area between the copper body of the electrode and the silver insert also depends on the current load. The optimum load ratio is 3 to 12 A per $mm^2$ of the contact area. With current loads over 12 $A/mm^2$, the contact area between copper and silver is no longer able to conduct the electric current sufficiently, which leads to a current loss and a drop in the performance of the electrode. Decreasing the current load under 3 $A/mm^2$ has no positive effect on the lifespan of the electrode.

With current loads over 5 A/mm$^2$, it is advisable to modify the design of the silver insert, so that it reaches inside the electrode and thus is cooled by the coolant directly. Direct cooling of the silver insert allows you to increase the current load on the contact area between the copper body of the electrode and the silver insert to up to 12 A/mm$^2$, while maintaining a sufficient electrode lifespan.

In order for both electric current and heat to be transmitted efficiently through the solderless contact area between the copper body of the electrode and the silver insert, the metals must adhere tightly to each other. The first prerequisite for this is low surface roughness of contact areas, which must be less than 0.4 Ra, measured as arithmetical mean deviation. Another prerequisite is that the diameter of the aperture in the copper base of the electrode is smaller than the diameter of the silver insert. The optimum value by which the silver insert diameter should exceed the aperture diameter expressed in micrometers matches the empirical relation

$$Ra + \frac{\sqrt{d}}{89} \bullet 1000 \, ,$$

where Ra stands for roughness in $\mu$m and d for diameter in mm.

With the specified overlap and roughness values, pressing of the silver insert into the aperture in the copper body of the electrode leads to a close contact between the silver and the copper. Surface roughness peaks are obliterated, as well as any pits in the surface. In accordance with that, the nature of the manufacturing method as per the invention lies in manufacturing the electrode body out of copper or a copper alloy in the form of a hollow cylinder whose open rear end is adapted to connect to a plasma arc torch and at whose front end there is a base in which a coaxial aperture is made, going from the front end of the electrode into the electrode body, furthermore a highly conductive insert is made of silver or a silver alloy, in whose front end a coaxial bore is made along some of its length, wherein the highly conductive insert is inserted along some of its length, starting from the front end, in the form of a cylinder with its diameter greater than the diameter of the coaxial bore by at least twice the value of roughness Ra of corresponding surfaces, and the emissive filling in the form of a cylinder greater than the diameter of the coaxial bore in the highly conductive insert by at least twice the value of roughness Ra of corresponding surfaces. Then, the highly conductive insert is pressed into the coaxial aperture in the front end of the electrode body, after which the emissive filling is pressed and caulked into the coaxial bore in the highly conductive insert. The roughness Ra of corresponding surfaces means the roughness of the inner surface of the coaxial aperture and the roughness of the surface of the highly conductive insert, or the roughness of the inner surface of the coaxial bore in the highly conductive insert and the roughness of the surface of the coating area of the emissive filling.

According to the invention, the silver insert, along with the emissive filling, is then secured in the copper body of the electrode by means of double-action compression along the electrode axis. This compression is carried out by means of a ring-shaped pressing tool acting on the front side of the conductive insert in order to deform the highly conductive insert, thus enlarging the front side of the conductive insert to a diameter greater than the diameter of the coaxial aperture. This pressing results in permanent joining of the silver insert to the copper base of the electrode. The double-action pressing leads to the maximum stuffing of the silver insert material, the upper limit of which is determined by the strength and elasticity of the material of the electrode base. An electrode manufactured in this way has an improved lifespan close to the lifespan of full silver electrodes.

Preferably, all contact areas, including the inner surface of the coaxial aperture, the surface of the highly conductive insert along some of its length, starting from its front end, the inner surface of the coaxial bore in the highly conductive insert, and the surface of the coating area of the emissive filling in a cylindrical shape, have the roughness Ra not exceeding 0.4.

In an advantageous embodiment of the manufacturing method, the double-action compression of the conductive insert into the coaxial aperture is performed by a ring-shaped pressing tool whose inside diameter is smaller than the diameter of the coaxial aperture and at the same time larger than the diameter of the emissive filling, and whose outside diameter is larger than the diameter of the coaxial aperture. As the pressing tool leaves marks, usually it is necessary to machine tool the front end of the electrode after the conductive insert is pressed into the coaxial aperture, in order to remove any redundant emissive filling material from the area not in direct contact with the ring-shaped pressing tool.

The highly conductive insert is manufactured in a part of its length, starting from the front end, in the shape of a cylinder with its diameter larger than diameter (d) by 1 to 45 $\mu$m, preferably by 14 to 32 $\mu$m, and emissive filling is made in the shape of a cylinder with its diameter larger than the diameter of the coaxial bore in highly conductive insert of coaxial aperture by 1 to 40 $\mu$m, preferably by 8 to 18 $\mu$m.

Brief Description of the Drawings

Additional details of the invention are provided in the drawings, where:

Fig. 1:    shows a section of a liquid-cooled plasma arc torch using the transferred plasma arc, equipped with the electrode as per the invention,

Fig. 2:    shows a section of the electrode as per the invention,

Fig. 3a:    shows a section of the electrode body and the highly conductive insert before the electrode is assembled in step one of the manufacturing method,

Fig. 3b:    shows the situation before pressing of the emissive filling in the next step of the manufacturing method,

Fig. 3c:    shows pressing of the emissive filling,

Fig. 3d    shows a section of the pressing of the highly conductive insert by means of a ring-shaped pressing tool according to an advantageous embodiment of the manufacturing method as per the invention, and

Fig. 4    shows a detailed section of the front end of the electrode immediately after pressing of the highly conductive insert into it using the ring-shaped pressing tool.

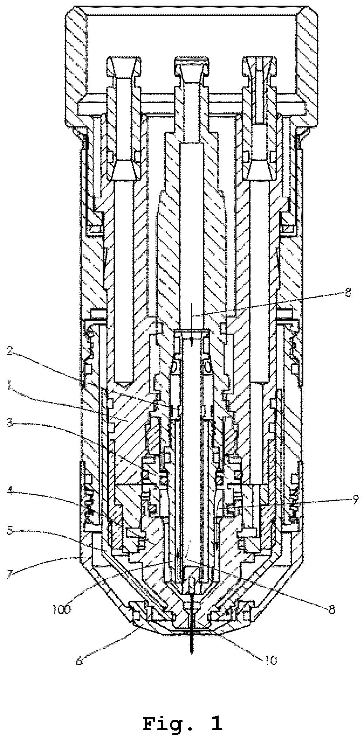

Figure 1 shows a section of a liquid-cooled plasma arc torch using the transferred plasma arc, with general representation of its component parts. The essential part is torch body 1, into which cooling pipe 2 is inserted, which is secured in body 1 of the torch by electrode 100. Also, it shows swirl ring 3, which is placed adjoining the outside surface of the electrode and which along with nozzle 4 forms the plasma chamber, to which plasma gas 9 is supplied through swirl ring 3; the plasma gas is then ionized by electric energy in the space between electrode 100 and nozzle 4. The electricity is supplied through body 1 of the torch to electrode 100, and a plasma arc is formed in the electrically conductive ionized gas between electrode 100 and the metallic material being cut. Nozzle 4, which directs plasma flow 10, is secured in torch body 1 by nozzle holder 5 fitted with guard 6, which shields nozzle 4 from harm. Guard 6 is secured to torch body 1 using shield cap 7 of the nozzle. Various types of plasma arc torches differ from each other depending on the design used by their manufacturers.

The coolant is supplied to the electrode through inlet 8, while the gas to be turned into plasma is supplied through inlet 9. Plasma arc 10 comes from the front end of electrode 100 through nozzle 4 of the torch.

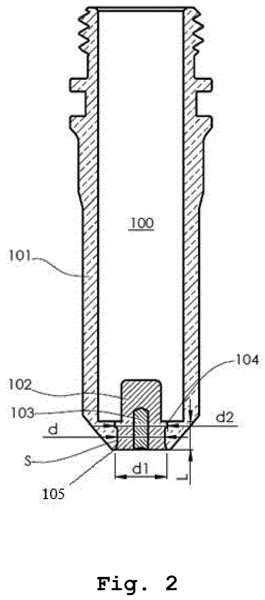

Figure 2 shows a section of plasma electrode 100 as per the invention. Electrode 100 consists of body 101 of the electrode in which highly conductive insert 102 is secured, with emissive filling 103 pressed inside it. Body 101 of the electrode is made of pure copper with no oxygen content. In the front end of electrode body 101, there is coaxial aperture 108 of length L. In its exemplary form, highly conductive insert 102 is made of a silver alloy which contains 92.5% silver by mass and 7.5% copper by mass. Highly conductive insert 102 is of a cylindrical shape with conical surfaces. It contains a basic cylindrical shape with diameter d, which is secured in coaxial aperture 108 in body 101 of the electrode. At the front end of highly conductive insert 102, which is shown at the bottom of Fig. 2, insert 102 comes to conical expansion 105 of diameter d1. When looking at Fig. 2, conical expansion 105 is followed by a basic cylindrical part of diameter d and above it, the insert contains either cylindrical or conical annular expansion 104 of diameter d2. Diameter d1 of conical expansion 105 of the front part of highly conductive insert 102 and diameter d2 of annular expansion 104 of highly conductive insert 102 are larger than diameter d of the basic cylindrical part. This design of insert 102 ensures that highly conductive insert 102 is secured permanently in body 101 of the electrode. Contact area S between copper body 101 of the electrode and silver insert 102 consists of a basic cylindrical part, annular expansion 104, and conical expansion 105. With length L, these three parts together make the total contact area S.

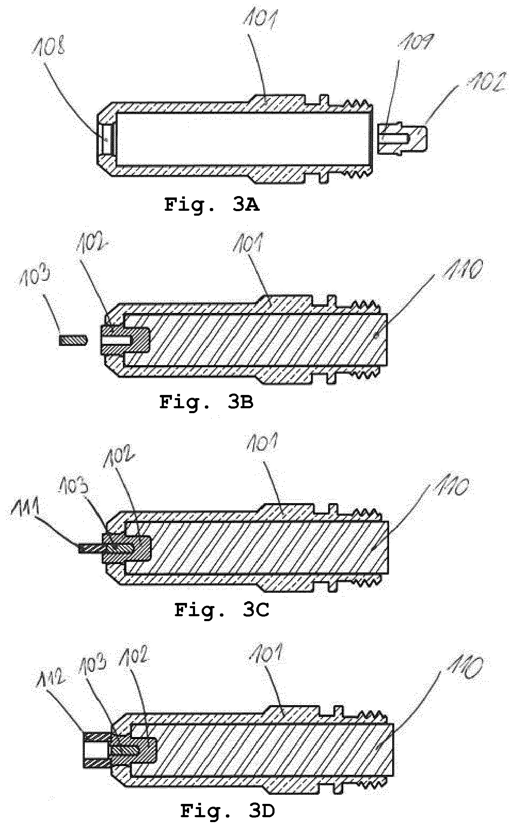

Figures 3A, 3B, 3C and 3D show the electrode in each consecutive phase of manufacturing.

Figure 3A shows semi-finished body 101 of the electrode with aperture 108 into which highly conductive insert 102 should be pressed, as well as semi-finished highly conductive insert 102, fitted with bore 109 for the emissive filling. Coaxial aperture 108 in body 101 of the electrode is made with a slightly smaller diameter than the cylindrical part of insert 102, which is then pressed into it. The optimum value by which the diameter of silver insert 102 should exceed the diameter of aperture 108, expressed in micrometers, matches the empirical relation

$$Ra + \frac{\sqrt{d}}{89} \bullet 1000 \, ,$$

where Ra stands for roughness in $\mu$m and d for diameter in $\mu$m. The roughness of the surface of aperture 108 in electrode body 101 and of the surface of highly conductive insert 102 is less than Ra 0.4.

Figure 3B shows semi-finished body 101 of the electrode with compressed highly conductive insert 102, which is pressed within electrode body 101 by means of pressing fixture 100, and semi-finished emissive filling 103.

Figure 3C shows semi-finished body 101 of the electrode into which highly conductive insert 102 is pressed, with emissive filling 103 pressed into it using pressing tool 111 against pressing fixture 110 for double-action compression.

Figure 3D shows semi-finished body 101 of the electrode with highly conductive insert 102 pressed into it and emissive filling 103 pressed into the insert. Furthermore, it shows ring-shaped pressing tool 112, which is applied against pressing fixture 110 to caulk highly conductive insert 102, i.e. to shape it into the required form.

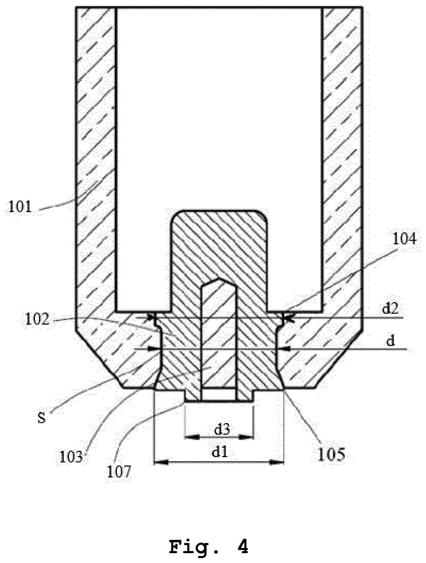

Figure 4 shows a detail of semi-finished electrode 100, consisting of electrode body 101, highly conductive insert 102, and emissive filling 103. Highly conductive insert 102 is secured in electrode body 101 using double-action compression, which can be also called double-action caulking. In this way, highly conductive insert 102 is shaped by double-action caulking to form conical expansion 105 of the front end of highly conductive insert 102 to the largest diameter d2, which is larger than diameter d of the basic cylindrical part. Double-action caulking causes stuffing of the material of highly conductive insert 102 towards body 101 of the electrode and emissive insert 103. Double-action caulking is carried out only on the ring-shaped surface delimited by diameters d3 and d1.

Description of the Preferred Embodiments

Electrode body 101 was made of copper in the shape of a hollow cylinder, at the front end of which coaxial aperture 108 was made with diameter d = 3.25 mm. Highly conductive insert 102 was made of a silver alloy containing 7.5% copper by mass. Highly conductive insert 102 was created along some of its length, starting from its front end, in the shape of a cylinder with its diameter greater than diameter d by

$$Ra + \frac{\sqrt{d}}{89} \bullet 1000,$$

which in this case is by 20.66 $\mu$m.

Emissive filling 103 was made of hafnium in the shape of a cylinder with diameter 1.3 mm, which was 13.21 $\mu$m larger than the diameter of coaxial bore 109 in the highly conductive insert 102. The electrode was designed for cutting using the current of 130 A.

First, the procedure shown in Fig. 3B was used to press highly conductive insert 102 into coaxial aperture 108 at the front end of electrode body 101, and then the procedure shown in Fig. 3C was used to press emissive filling 103 into coaxial bore 109 of highly conductive insert 102.

Then, highly conductive insert 102 was caulked into coaxial aperture 108 by dual-action compression using ring-shaped pressing tool 112 at the front end of conductive insert 102. In this way, conical expansion 105 with diameter d1 larger than 3.2 mm was created at the front end of highly conductive insert 102.

In various embodiments, the thickness of part 107 of silver highly conductive insert 102 surrounding hafnium emissive filling 103 ranged from 0.5 to 1.0 mm.

To manufacture an electrode for cutting using the current of 400 A, electrode body 101 was manufactured, at the front end of which coaxial aperture 108 was made with diameter d = 7.4 mm. Then, highly conductive insert 102 was created along some of its length, starting from its front end, in the shape of a cylinder with its diameter greater than diameter d by

$$Ra + \frac{\sqrt{d}}{89} \bullet 1000,$$

which in this case is by 30.97 $\mu$m.

Emissive filling 103 was made of hafnium in the shape of a cylinder of length 5.2 mm, with its diameter 17.07 $\mu$m larger than the diameter of coaxial bore 109 in the highly conductive insert 102. The electrode was designed for cutting using the current of 400 A.

In various embodiments, the thickness of part 107 of silver highly conductive insert 102 surrounding hafnium emissive filling 103 ranged from 1 to 3 mm.

The optimum load ratio ranged from 3 A/mm$^2$ to 10 A/mm$^2$.

Additional examples of diameters and lengths of the contact area of silver highly conductive insert 102 are provided in the table below:

| Current for which electrode is designed | diameter | length L | contact area S | current load |
|---|---|---|---|---|
| 80 A | 2.7 mm | 3.0 mm | 25.45 mm$^2$ | 3.14 A/ mm$^2$ |
| 100 A | 2.8 mm | 3.7 mm | 32.59 mm$^2$ | 3.06 A/ mm$^2$ |
| 130 A | 3.25 mm | 2.55 mm | 26.04 mm$^2$ | 4.99 A/ mm$^2$ |
| 200 A | 4.25 mm | 2.55 mm | 34.05 mm$^2$ | 5.87 A/ mm$^2$ |
| 260 A | 5.25 mm | 2.85 mm | 47.01 mm$^2$ | 5.53 A/ mm$^2$ |
| 400 A | 7.4 mm | 2.50 mm | 56.55 mm$^2$ | 7.07 A/mm$^2$ |

Reference Signs List

1     torch body

2     cooling pipe

3     swirl ring

4     torch nozzle

5     nozzle holder

6     guard

7     nozzle shield cap

8     supply and circulation of coolant around electrode

9     supply of plasma gas

10    plasma arc

100   electrode

101   electrode body

102   highly conductive insert

103   emissive filling

104   annular expansion of highly conductive insert

105   conical expansion of front part of highly conductive insert

107   part of highly conductive insert surrounding emissive filling

108   coaxial aperture in electrode body

109   coaxial bore for emissive filling

110   pressing fixture

111   pressing tool

112     ring-shaped pressing tool

d       diameter of coaxial aperture
d1      diameter of conical expansion of highly conductive insert
d2      diameter of annular expansion of highly conductive insert
d3      inside diameter of ring-shaped pressing tool
L       length of aperture for pressing of highly conductive insert
S       contact area

**Claims**

1.  Electrode (100) for a plasma arc torch, with its body (101) made of copper or a copper alloy, made in the shape of a hollow cylinder, whose rear end is adapted to connect to the plasma arc torch **characterized in that** at the front end there is coaxial aperture (108) going from the front end of electrode (100) into electrode body (101), wherein coaxial aperture (108) contains highly conductive insert (102), in whose front part emissive filling (103) is stored coaxially, highly conductive insert (102) is pressed into coaxial aperture (108) with its diameter enlarged on its side located at the front end of electrode body (101) to diameter (d1) larger than diameter (d) of coaxial aperture (108).

2.  Electrode (100) of claim 1, **characterized in that** conductive insert (102) is, on its side located inside electrode body (101), provided with annular expansion (104) whose diameter (d2) is larger than diameter (d) of coaxial aperture (108).

3.  Electrode (100) according to claim 1 or 2, **characterized in that** highly conductive insert (102) is made of a silver alloy containing no more than 10 % copper by mass.

4.  Electrode (100) according to any of claims 1 to 3 above, **characterized in that** emissive filling (103) is manufactured in the shape of a cylinder made of hafnium or zirconium.

5.  Electrode (100) according to any of claims 1 to 4 above, **characterized in that** the thickness of highly conductive insert (102) surrounding emissive filling (103) ranges from 0.5 mm to 3 mm.

6.  Electrode (100) according to any of claims 1 to 5 above, **characterized in that** the diameter (d) of the highly conductive insert ranges from 1.6 to 8.0 mm and the length (L) of the contact area (S) between electrode body (101) and highly conductive insert (102) ranges from 1.6 to 4.2 mm so that, depending on the current for which the electrode (100) is designed, resulting current load is 3 to 12 ampere per $mm^2$ of contact area (S).

7.  The manufacturing method of electrode (100) for a plasma arc torch of any of claims 1 to 6 above, **characterized in that** it involves the following steps:

    body (101) of the electrode is made of copper or a copper alloy in the form of a hollow cylinder, whose open rear end is adapted to connect to the plasma arc torch and at whose front end there is coaxial aperture (108) of diameter (d), going from the front end of electrode (100) into electrode body (101),
    highly conductive insert (102) is made of silver or a silver alloy, in whose front end a coaxial bore is made along some of its length, wherein highly conductive insert (102) is made along some of its length, starting from the front end, in the form of a cylinder with its diameter greater than diameter (d) of coaxial aperture (108) by at least twice the value of roughness Ra of corresponding surfaces,
    emissive filling (103) is manufactured in the shape of a cylinder with its diameter greater than the diameter of the coaxial bore in highly conductive insert (102) by at least twice the value of roughness Ra of corresponding surfaces,
    highly conductive insert (102) is pressed into coaxial aperture (108) at the front end of electrode body (101), and emissive filling (103) is pressed into the coaxial bore in highly conductive insert (102),
    then highly conductive insert (102) is pressed by dual-action pressing into coaxial aperture (108) by means of ring-shaped pressing tool (112) pushing against the front side of highly conductive insert (102) in order to cause a plastic deformation of highly conductive insert (102) while enlarging the front side of highly conductive insert (102) to diameter (d1) larger than diameter (d) of coaxial aperture (108),
    wherein said dual-action pressing of highly conductive insert (102) into he coaxial aperture (108) is performed by ring-shaped pressing tool (112) whose inside diameter (d3) is smaller than diameter (d) of coaxial aperture (108) and at the same time larger than the diameter of emissive filling (103), and whose outside diameter is

8

larger than diameter (d) of coaxial aperture (108).

8. The method according to claim 7, **characterized in that** after highly conductive insert (102) is pressed into coaxial aperture (108), the front end of electrode (100) is machine-tooled in order to remove any redundant material of emissive filling (103) from the area not in direct contact with ring-shaped pressing tool (112).

9. The method according to any of claims 7 to 8, **characterized in that** the inner surface of coaxial aperture (108), the surface of highly conductive insert (102) along some of its length, starting from its front end, the inner surface of the coaxial bore in highly conductive insert (102), and the surface of the coating area of emissive filling (103) in a cylindrical shape, have the roughness Ra not exceeding 0,4.

10. The method according to any of claims 7 to 9, **characterized in that** highly conductive insert (102) is manufactured along some of its length, starting from the front end, in the shape of a cylinder with its diameter larger than diameter (d) by 14 to 32 $\mu$m, and emissive filling (103) is made in the shape of a cylinder with its diameter larger than the diameter of the coaxial bore in highly conductive insert (102) of coaxial aperture (108) by 8 to 18 $\mu$m.


**Patentansprüche**

1. Elektrode (100) für einen Plasma-Lichtbogenbrenner mit einem Körper (101) aus Kupfer oder einer Kupferlegierung in Form eines
Hohlzylinders, dessen hinteres Ende so beschaffen ist, dass er mit dem Plasma-Lichtbogenbrenner verbunden werden kann **dadurch gekennzeichnet, dass** es am
vorderen Ende eine koaxiale Öffnung (108) gibt,
die vom vorderen Ende der Elektrode (100) in den Elektrodenkörper (101) übergeht, wobei die koaxiale Öffnung (108) einen hochleitfähigen Einsatz (102) enthält, in dessen vorderem Teil die emittierende Füllung (103) koaxial gespeichert ist, der hochleitfähige Einsatz (102) ist
in die koaxiale Öffnung (108) gepresst, wobei ihr Durchmesser an ihrer Seite am vorderen Ende des Elektrodenkörpers (101) auf einen Durchmesser (dl) vergrößert ist, der größer als der Durchmesser (d) der koaxialen Öffnung (108) ist.

2. Elektrode (100) nach Anspruch 1, **dadurch gekennzeichnet, dass** der leitende Einsatz (102) an seiner Seite innerhalb des Elektrodenkörpers (101) mit einer ringförmigen Erweiterung (104) versehen ist, deren Durchmesser (d2) größer als der Durchmesser (d) der koaxialen Öffnung (108) ist.

3. Elektrode (100) nach Anspruch 1 oder 2, **dadurch gekennzeichnet, dass** der hochleitfähige Einsatz (102) aus einer Silberlegierung besteht, die nicht mehr als 10 Masse-% Kupfer enthält.

4. Elektrode (100) nach einem der obigen Ansprüche 1 bis 3, **dadurch gekennzeichnet, dass** die emittierende Füllung (103) in Form eines Zylinders aus Hafnium oder Zirkonium hergestellt ist.

5. Elektrode (100) nach einem der obigen Ansprüche 1 bis 4, **dadurch gekennzeichnet, dass** die Dicke des hochleitfähigen Einsatzes (102), der die emittierende Füllung (103) umgibt, im Bereich von 0,5 mm bis 3 mm liegt.

6. Elektrode (100) nach einem der obigen Ansprüche 1 bis 5, **dadurch gekennzeichnet, dass** der Durchmesser (d) des hochleitfähigen Einsatzes im Bereich von 1,6 bis 8,0 mm, und die Länge (L) der Kontaktfläche (S) zwischen dem Elektrodenkörper (101) und dem hochleitfähigen Einsatz (102) im Bereich von 1,6 bis 4,2 mm liegen, so dass je nach Stromstärke, für die die Elektrode (100) ausgelegt ist, die resultierende Strombelastung 3 bis 12 Ampere pro mm$^2$ Kontaktfläche (S) beträgt.

7. Das Herstellungsverfahren der Elektrode (100) für einen Plasmabogenbrenner nach einem der obigen Ansprüche 1 bis 6 ist **dadurch gekennzeichnet, dass** es die folgenden Schritte umfasst:

   Der Körper (101) der Elektrode besteht aus Kupfer oder einer Kupferlegierung in Form eines Hohlzylinders, dessen offenes hinteres Ende
   zur Verbindung mit dem Plasma-Lichtbogenbrenner geeignet ist und an dessen vorderem Ende sich eine koaxiale Öffnung (108) mit einem Durchmesser (d) befindet, die vom vorderen Ende der Elektrode (100) in den Elektrodenkörper (101) führt,

Der hochleitfähige Einsatz (102) besteht aus Silber oder einer Silberlegierung, in dessen vorderem Ende entlang eines Teils seiner Länge eine koaxiale Bohrung gebohrt ist, in die der hochleitfähige Einsatz (102) entlang eines Teils seiner Länge, ausgehend vom vorderen Ende, in Form eines Zylinders, dessen Durchmesser um mindestens den doppelten Wert der Rauheit Ra der entsprechenden Oberflächen größer als der Durchmesser (d) der koaxialen Öffnung (108) ist, eingesetzt ist,

die emittierende Füllung (103) wird in Form eines Zylinders hergestellt, dessen Durchmesser um mindestens den doppelten Wert der Rauheit Ra der entsprechenden Oberflächen größer als der Durchmesser der koaxialen Bohrung im hochleitfähigen Einsatz (102) ist,

der hochleitfähige Einsatz (102) wird in die koaxiale Öffnung (108) am vorderen Ende des Elektrodenkörpers (101) gepresst, und

die emittierende Füllung (103) wird in die koaxiale Bohrung im hochleitfähigen Einsatz (102) gepresst,

dann wird der hochleitfähige Einsatz (102) durch beidseitiges Drücken in die koaxiale Öffnung (108) mittels eines ringförmigen Presswerkzeugs (112) gepresst, das gegen die Vorderseite des hochleitfähigen Einsatzes (102) drückt, um eine plastische Verformung des hochleitfähigen Einsatzes (102) zu verursachen, während die Vorderseite des hochleitfähigen Einsatzes (102) auf einen Durchmesser (dl) vergrößert wird, der größer als der Durchmesser (d) der koaxialen Öffnung (108) ist,

wobei das erwähnte beidseitige Pressen des hochleitfähigen Einsatzes (102) in die koaxiale Öffnung (108) mit einem ringförmigen Presswerkzeug (112) erfolgt, dessen Innendurchmesser (d3) kleiner als der Durchmesser (d) der koaxialen Öffnung (108) ist und gleichzeitig größer als der Durchmesser der emittierenden Füllung (103) und dessen Außendurchmesser größer als der Durchmesser (d) der koaxialen Öffnung (108) ist.

8. Verfahren nach Anspruch 7, **dadurch gekennzeichnet, dass** nach dem Einpressen des hochleitfähigen Einsatzes (102) in die koaxiale Öffnung (108) das vordere Ende der Elektrode (100) maschinell bearbeitet wird, um überflüssiges Material der emittierenden Füllung (103) aus dem Bereich, der nicht in direktem Kontakt mit dem ringförmigen Presswerkzeug (112) steht, zu entfernen.

9. Verfahren nach einem der Ansprüche 7 bis 8, **dadurch gekennzeichnet, dass** die Innenfläche der koaxialen Öffnung (108), die Oberfläche des hochleitfähigen Einsatzes (102) entlang eines Teils seiner Länge, ausgehend von seinem vorderen Ende, die Innenfläche der koaxialen Bohrung im hochleitfähigen Einsatz (102) und die Oberfläche des Beschichtungsbereichs der emittierenden Füllung (103) in einer zylindrischen Form eine Rauheit Ra aufweisen, die 0,4 nicht überschreitet.

10. Verfahren nach einem der Ansprüche 7 bis 9, **dadurch gekennzeichnet, dass** ein hochleitfähiger Einsatz (102) entlang eines Teils seiner Länge, ausgehend vom vorderen Ende, in Form eines Zylinders hergestellt ist, dessen Durchmesser um 14 bis 32 $\mu$m größer als der Durchmesser (d) ist, und die emittierende Füllung (103) in Form eines Zylinders hergestellt ist, dessen Durchmesser um 8 bis 18 $\mu$m größer ist als der Durchmesser der koaxialen Bohrung im hochleitfähigen Einsatz (102) der koaxialen Öffnung (108).

## Revendications

1. Une électrode (100) pour torche à plasma d'arc, dont le corps (101) est fait en cuivre ou en alliage de cuivre, fabriqué sous forme d'un cylindre creux, dont l'extrémité arrière est adaptée pour se raccorder à la torche à plasma d'arc, **caractérisée en ce que**
à l'extrémité avant il y a une ouverture (108)
coaxiale allant de l'extrémité avant de l'électrode (100) dans le corps (101) de l'électrode, où l'ouverture (108) coaxiale contient un insert (102) hautement conducteur, dans la partie avant duquel une garniture (103) émettrice est stockée de manière coaxiale, l'insert (102) hautement conducteur est
comprimé dans l'ouverture (108) coaxiale avec son diamètre élargi sur le côté situé à l'extrémité avant du corps (101) de l'électrode à un diamètre (dl) plus grand que le diamètre (d) de l'ouverture (108) coaxiale.

2. L'électrode (100) de la revendication 1, **caractérisée en ce que** l'insert (102) conducteur, sur son côté situé à l'intérieur du corps (101) de l'électrode, est pourvu d'un élargissement (104) annulaire dont le diamètre (d2) est plus grand que le diamètre (d) de l'ouverture (108) coaxiale.

3. L'électrode (100) selon la revendication 1 ou 2, **caractérisée en ce que** l'insert (102) hautement conducteur est fabriqué en alliage d'argent ne contenant pas plus de 10% de cuivre en masse.

**4.** L'électrode (100) selon n'importe laquelle des revendications 1 à 3 ci-dessus, **caractérisée en ce que** la garniture (103) émettrice est fabriquée sous forme d'un cylindre en hafnium ou zirconium.

**5.** L'électrode (100) selon n'importe laquelle des revendications 1 à 4 ci-dessus, **caractérisée en ce que** l'épaisseur de l'insert (102) hautement conducteur entourant la garniture (103) émettrice va de 0,5 mm à 3 mm.

**6.** L'électrode (100) selon n'importe laquelle des revendications 1 à 5 ci-dessus, **caractérisée en ce que** le diamètre (d) de l'insert hautement conducteur va de 1,6 à 8,0 mm et la longueur (L) de la zone (S) de contact entre le corps (101) de l'électrode et l'insert (102) hautement conducteur va de 1,6 à 4,2 mm de façon que, en fonction du courant pour lequel l'électrode (100) est conçue, la charge de courant qui en résulte est de 3 à 12 ampères par mm$^2$ de zone (S) de contact.

**7.** La méthode de fabrication de l'électrode (100) pour une torche à plasma d'arc de l'importe laquelle des revendications 1 à 6 ci-dessus, **caractérisée en ce qu'elle** comprend les étapes suivantes :

le corps (101) de l'électrode est fabriqué en cuivre ou en alliage de cuivre sous forme d'un cylindre creux, dont l'extrémité arrière ouverte

est adaptée pour se raccorder à la torche à plasma d'arc et à l'extrémité avant de laquelle il y a une ouverture (108) coaxiale d'un diamètre (d), allant de l'extrémité avant de l'électrode (100) dans le corps (101) de l'électrode, l'insert (102) hautement conducteur est fabriqué en argent ou alliage d'argent, dans l'extrémité avant duquel un trou coaxial est fait le long d'une partie de sa longueur, où l'insert (102) hautement conducteur est fait le long d'une partie de sa longueur, commençant à l'extrémité avant, sous forme d'un cylindre dont le diamètre est plus grand que le diamètre(d) de l'ouverture (108) coaxiale d'au moins deux fois la valeur de rugosité Ra des surfaces correspondantes,

la garniture (103) émettrice est fabriquée sous forme d'un cylindre dont le diamètre est plus grand que le diamètre du trou coaxial dans l'insert (102) hautement conducteur d'au moins deux fois la valeur de rugosité Ra des surfaces correspondantes,

l'insert (102) hautement conducteur est comprimé dans l'ouverture (108) coaxiale à l'extrémité avant du corps (101) de l'électrode et la garniture (103) émettrice est comprimée dans le trou coaxial de l'insert (102) hautement conducteur,

puis l'insert (102) hautement conducteur est comprimé par une double action pressant dans l'ouverture (108) coaxiale au moyen d'un outil (112) de pressage en forme d'anneau poussant contre le côté avant de l'insert (102) hautement conducteur afin de causer une déformation plastique de l'insert (102) hautement conducteur tout en élargissant le côté avant de l'insert (102) hautement conducteur à un diamètre (dl) plus grand que le diamètre (d) de l'ouverture (108) coaxiale,

où ladite double action de pression de l'insert (102) hautement conducteur dans l'ouverture (108) coaxiale est exécutée par un outil (112) de pressage en forme d'anneau dont le diamètre interne (d3) est inférieur au diamètre (d) de l'ouverture (108) coaxiale et en même temps supérieur au diamètre de la garniture (103) émettrice et dont le diamètre extérieur est plus grand que le diamètre (d) de l'ouverture (108) coaxiale.

**8.** La méthode selon la revendication 7, **caractérisée en ce qu'**après que l'insert (102) hautement conducteur soit comprimé dans l'ouverture (108) coaxiale, l'extrémité avant de l'électrode (100) est usinée afin de retirer tout matériau superflu de la garniture (103) émettrice de la zone qui n'est pas en contact direct avec l'outil (112) de pressage en forme d'anneau.

**9.** La méthode selon n'importe laquelle des revendications 7 à 8, **caractérisée en ce que** la surface intérieure de l'ouverture (108) coaxiale, la surface de l'insert (102) hautement conducteur le long d'une partie de sa longueur, commençant à son extrémité avant, la surface intérieure du trou coaxial dans l'insert (102) hautement conducteur et la surface de la zone de revêtement de la garniture (103) émettrice sous une forme cylindrique, ont la rugosité Ra ne dépassant pas 0,4.

**10.** La méthode selon n'importe laquelle des revendications 7 à 9, **caractérisée en ce que** l'insert (102) hautement conducteur est fabriqué le long d'une partie de sa longueur, commençant à l'extrémité avant, sous une forme cylindrique avec un diamètre plus grand que le diamètre (d) de 14 à 32 $\mu$m et la garniture (103) émettrice est faite sous forme d'un cylindre avec un diamètre plus grand que le diamètre du trou coaxial dans l'insert (102) hautement conducteur de l'ouverture (108) coaxiale de 8 à 18 $\mu$m.

Fig. 1

Fig. 2

Fig. 3A

Fig. 3B

Fig. 3C

Fig. 3D

Fig. 4

**EP 3 482 869 B1**

**REFERENCES CITED IN THE DESCRIPTION**

**Patent documents cited in the description**

- JP 2011014295 A
- US 6177647 B
- US 6020572 A
- EP 1298966 A
- US 6841754 B
- US 5767478 A
- US 6114650 A
- US 6329627 B1